# EUROPEAN PATENT APPLICATION

(11) **EP 4 787 290 A1**
(43) Date of publication of application: **05.08.2026**
(21) Application number: 25155786.4
(22) Date of filing: 04.02.2025
(51) Int. Cl.: G06T 5/20, G06T 5/50, G06T 5/70

(54) **IMAGING APPARATUS, METHOD FOR TIME-RESOLVED MEDICAL IMAGING, STORAGE MEDIUM AND COMPUTER PROGRAM PRODUCT**

(71) Applicant: Siemens Healthineers AG, 91301 Forchheim (DE)
(72) Inventor: Schwarz, Annette, 91058 Erlangen (DE); Dickmann, Jannis, 91052 Erlangen (DE); Schmidt, Simon, 90409 Nürnberg (DE); Vega, Fernando, 91056 Erlangen (DE)
(74) Representative: Siemens Healthineers Patent Attorneys

(57) **Abstract**

The present invention relates to an imaging apparatus, the imaging apparatus comprising: a data-acquisition module configured to capture and receive a plurality of temporally ordered datasets used in an image generation process for an entity in at least one predefined time period, wherein the plurality of temporally ordered datasets comprise spatial domain information and time domain information; at least one denoising module coupled to the data-acquisition module and comprising a settable/adjustable bilateral filter, wherein the at least one denoising module is configured to set/adjust filter parameters of the settable/adjustable bilateral filter using the received spatial domain information and the time domain information, such to denoise the plurality of temporally ordered datasets using the settable/adjustable bilateral filter and to obtain a plurality of denoised temporally ordered datasets; an outputting module configured to output at least one time-resolved medical image for the entity using the plurality of denoised temporally ordered datasets. In the present invention, it further relates to a method for time-resolved medical imaging implemented in the proposed imaging apparatus, a computer program product and a non-transitory computer-readable storage medium.

## Description

The present invention relates to an imaging apparatus. The present invention further relates to a method for time-resolved medical imaging employing in the imaging apparatus, a storage medium and a computer program product.

The clinical use of the medical imaging is of essential importance in the human medicine and veterinary medicine. From two-dimensional, 2D, medical imaging, which offers flat, linear views, limited to length and width to three-dimensional, 3D, medical imaging, which adds the third dimension of depth, the effort to increasing the dimensions of medical image to provide a more comprehensive medical imaging presentation has never ceased.

In recent years, time-resolved medical imaging provides a more advanced form of imaging. The time-resolved medical imaging is a medical imaging technology that considers the time as the additional dimension and aims to represent the motion of the regions of interest over time. Through time-resolved medical imaging, the movement of the regions of interest can be better observed.

In addition, when an ionizing radiation is involved in the medical imaging process, the higher the radiation dose contributed to the image, the less image noise will be apparent and the easier the low-contrast structures will be perceived. However, the possible damage done to the human or animal bodies is proportional to the absorbed dose of the ionizing radiation to the organs of the bodies. Since the time-resolved medical imaging usually involves capturing multiple static medical images over predefined time points, the number of repeat scans a patient or an animal can receive for continuously adapting the radiotherapy treatment plan might be limited.

Therefore, the experts have been striving to improve the imaging apparatus in time-resolved medical imaging to limit the radiation dose used to obtain high-quality medical images, and to provide an improved view of the results of the movement of the regions of interest.

Previous solutions to denoise time-resolved imaging typically involve applying 2D or 3D spatial imaging denoising methods to the time-resolved medical imaging, in which the time domain information in time-resolved medical imaging is not involved in the process of image denoising.

In the meantime, since the bilateral filters are successful in smoothing images while preserving edges in images, 2D or 3D spatial imaging denoising methods frequently adopt bilateral filters to filter the image noises.

In a scientific publication, A. M. Mendrik et. al , "TIPS bilateral noise reduction in 4D CT perfusion scans produces high-quality cerebral blood flow maps," Phys. Med. Biol.56, 3857-3872 (2011), the use of four-dimensional, 4D, bilateral filters for denoising the medical images of brains scans is explored, which includes a measure of voxel similarity in time-intensity profile besides the 3D spatial domain voxel values. However, fine-tuning the 4D bilateral filters to the specific noise characteristics can be a challenge. Besides, as illustrated in another scientific publication, Wagner, Fabian, et al. "Ultralow-parameter denoising: trainable bilateral filter layers in computed tomography." Medical physics 49.8, 5107-5120 (2022), the bilateral filters have achieved strong denoising performance for 3D spatial image data and reduced computation load at the same time. However, the time-resolved image data has not been used to train the bilateral filters in this literature. Most image generation or denoising algorithms are built based on deep artificial neural networks with multiple layers and contain hundreds of thousands of trainable parameters, which means that the training process for the denoising algorithm requires intensive computational load. Although training with deep artificial neural networks facilitates extracting complex features from data, it is impossible to fully comprehend the data processing and it has a possibility to produce hallucinations.

Against this background, the problem addressed by the present invention is to provide an imaging apparatus which implements a novel method for time-resolved medical imaging.

This problem is solved according to the invention by an imaging apparatus having the features of claim 1 and/or by a method for time-resolved medical imaging having the features of claim 10. Further, a computer program product having the features of claim 14 and a non-transitory computer-readable storage medium having the features of claim 15 are provided.

According thereto, there is provided:
- An imaging apparatus, the imaging apparatus comprising: a data-acquisition module configured to capture and receive a plurality of temporally ordered datasets used in an image generation process for an entity in at least one predefined time period, wherein the plurality of temporally ordered datasets comprise spatial domain information and time domain information; at least one denoising module coupled to the data-acquisition module and comprising a settable/adjustable bilateral filter, wherein the at least one denoising module is configured to set/adjust filter parameters of the settable/adjustable bilateral filter using the received spatial domain information and the time domain information, such to denoise the plurality of temporally ordered datasets using the settable/adjustable bilateral filter and to obtain a plurality of denoised temporally ordered datasets; and an outputting module configured to output at least one time-resolved medical image for the entity using the plurality of denoised temporally ordered datasets.
- A method for time-resolved medical imaging, in particular by employing an imaging apparatus according to the present invention. The method comprising the steps of:
   capturing and receiving a plurality of temporally ordered datasets used in an image generation process for an entity in at least one predefined time period, wherein the plurality of temporally ordered datasets comprise spatial domain information and time domain information; setting/adjusting filter parameters of a settable/adjustable bilateral filter using the received spatial domain information and the time domain information,
   such to denoise the plurality of temporally ordered datasets using the settable/adjustable bilateral filter and to obtain a plurality of denoised temporally ordered datasets; and
   outputting at least one time-resolved medical image for the entity using the plurality of denoised temporally ordered datasets.
- A computer program product including a computer program, when program sections of the computer program are executed by a computer, cause the imaging apparatus to execute the method according to the invention.
- A non-transitory computer-readable storage medium storing thereon the computer program according to the invention by a computer.

The proposed method according to the present invention focuses a novel way to denoise the medical images by employing a settable/adjustable bilateral filter using the spatial domain information and time domain information of the data used in an image generation process. A settable/adjustable bilateral filter is a bilateral filter that may automatically set or adjust its filter parameters and configurations and is thus optimizable. With the adoption of the novel method, when capturing the data used in an image generation process is involving an ionizing radiation or long acquisition time, an amount of deposited radiation dose that necessary to acquire a medical image is reduced without compromising the image quality, such as contrast, temporal resolution and geometric accuracy. The current application aims to combine the benefits of settable/adjustable bilateral filters and the adoption of time domain information of the data used in an image generation process, in order to achieve significant improved medical images.

The present invention is based on the idea to provide an imaging apparatus which implements a novel method for time-resolved medical imaging. The method focuses on proposing a novel way to denoise the medical images with a settable/adjustable bilateral filter using the spatial domain information and time domain information of the data used in an image generation process. In the present invention, in order to provide a clearer explanation, the process from the input of data used in an image generation process for an entity to the output of the time-resolved image can be assumed to be a processing pipeline having an input, an output, and a channel between the input and the output.

The input of the processing pipeline is a plurality of temporally ordered datasets used in an image generation process for an entity captured and received in at least one predefined time period. Therefore, the plurality of temporally ordered datasets comprise both the spatial domain information and the time domain information. The entity may refer to the regions of interest of a patient, a sick animal, a healthy person or animal providing comparative data through medical imaging for research or other purposes. The entity may also refer to the non-living objects, such as imaging phantoms that designed to mimic human or animal anatomy or tissue properties.

The processing of the plurality of temporally ordered datasets are involving one or multiple settable/adjustable bilateral filter in the channel of the processing pipeline. The settable/ adjustable bilateral filter is setting/adjusting by a denoising module of the imaging apparatus using the spatial domain information and the time domain information of the plurality of temporally ordered datasets. During the setting/adjusting of the settable/adjustable bilateral filter, the spatial domain information and the time domain information of the plurality of temporally ordered datasets are used. The spatial domain information typically involves two or three spatial parameters and one intensity range parameter for the settable/adjustable bilateral filter. The time domain information typically involves the time-intensity profile of the parameters involved in those parameters. In time-resolved medical imaging, each scan generates the image of regions of interest containing the same anatomy in different predefined time points. The different predefined time points may be different time points in the same time period or different time points in the different time periods. The time periods may be time cycles. These scans may slightly deform by the motion of the patients. If the pixel or voxel value differs too much from the surrounding pixel or voxel value from the same predefined time point recording at a different time cycles, it can be assumed that it is noise. The pixel or voxel value can be also assumed that it is noise, when these pixel or voxel value differs too much from the surrounding pixel or voxel value from the scans that contains similar anatomy but are recoded at different predefined time points within one time period or time cycle. Therefore, the more scans perform on the regions of interest, the more facilitative the noise filtering.

The output of the processing pipeline is the time-resolved medical images. The outputting module outputs at least one time-resolved image for the entity using the plurality of denoised temporally ordered datasets.

The imaging apparatus, which employs a novel method for time-resolved medical imaging improves the signal to noise ratio, SNR, of the reconstructed medical images for better representation of lesions in low contrast organs. It allows for dose reduction in time-resolved medical imaging when an ionizing radiation is involving in the imaging process. It allows for acquisition time reduction when a prolonging acquisition time is involving in the imaging process. It further avoids tube cooling conflicts in time-resolved tomographic imaging acquisitions.

Advantageous configurations and developments emerge from the further dependent claims and from the description with reference to the figures of the drawings.

In a possible embodiment of the imaging apparatus, the data-acquisition module is configured to capture and receive the plurality of temporally ordered datasets comprising raw detector data described by a plurality of sinograms. Sinogram is used as a 2D transitional image between the raw detector data and the final medical image in some of the medical imaging processes. The proposed imaging apparatus allows a direct filter action on the sinogram. Taking an example of a region of interest imaged by the computed tomography, CT, scanner, sinogram is generated by transforming the raw X-ray projection data taken from various angles into a 2D graphical representation. The X-ray projection refers to a process that the X-ray tube emits an X-ray beam at a given gantry angle, then the beam passes through the region of interest and is intercepted by an imaging detector. The detector converts the intercepted X-ray beam signal into an electronic signal. The trajectory of the X-ray projection corresponding to the region of interest is following a sine wave, which the X-ray angle and the detector position are taken as the axes of the sinogram. In addition, taking an example of a region of interest imaged with a ring-style positron emission tomography scanner, PET scanner, a region of interest will be injected with a PET agent that will localize the region of interest and decay with the emission of a positron. The positron is then annihilated with an electron, which is leading to a coincidence event detection that their masses are converted to energy in the form of two photons being emitted back-to-back. The annihilation has occurred along the line connecting the two detectors, which is referred to as the line of response, LOR. For collecting the raw detector data, the LOR is characterized by the angle of the orientation of the LOR and the shortest distance between the LOR and the center of the PET gantry. If a large number of LORs are plotted from the same region of interest, the resulting graph is represented by a sine wave. This graph visualizes the raw detector data and is referred to as a sinogram. The proposed imaging apparatus can conduct filter function directly on the sinograms, which facilitates the later data processing step with less noises.

In a possible embodiment of the imaging apparatus, the data-acquisition module is configured to capture and receive the plurality of temporally ordered datasets comprising reconstructed image data represented by a plurality of reconstructed images. The proposed imaging apparatus further allows a filter action on the reconstructed medical images. The process of using the raw detector data to create an image is called image reconstruction. The reconstructed image data can be from the data encoded in sinogram. In CT imaging, once the medical images have been reconstructed from the raw detector data, so that each pixel or voxel is assigned a specific value used to express CT density in a standardized fashion. The reconstructed image data can be also from the data encoded in other form of transitional images. For example, magnet resonance imaging, MRI, is an imaging process collects raw detector data and converts them to the transitional data represented in the k-space. K-space is a domain that represents the spatial frequencies composition and the phase information of imaging the region of interest. Each point in k-space corresponds to a specific combination of spatial frequency and phase information. The MRI reconstructs the image from the k-space data into a medical image. The proposed imaging apparatus allows a filter action on the reconstructed medical images further increases the flexibility in the application of the imaging apparatus. In addition, the proposed imaging apparatus may allow a filter action on the sinograms and the reconstructed medical images simultaneously.

In a possible embodiment of the imaging apparatus, the data-acquisition module is configured such, that that the spatial domain information comprises 3D spatial domain information. The 3D spatial domain information can be obtained from the imaging that represents the region of interest in the dimensions of length, width and depth. For example, the 3D spatial domain information can be obtained from CT scanning or the like, which are characterized by the tomographic imaging where the cross-sectional images from different layers of the region of interest are imaged and aggregated into a 3D image. The 3D spatial domain information can be obtained from MRI scanning or the like that use magnetic field gradients and electromagnetic pulses to spatially encode the intensity of a signal in the region of interest. The 3D spatial domain information can be obtained from PET scanning or the like that detect radiation rays from the annihilation of the particles to form a 3D medical image. Thus, in this case the time-resolved imaging can also be called as 4D imaging.

In a possible embodiment of the imaging apparatus, the data-acquisition module is configured such, that that the spatial domain information comprises 2D spatial domain information. The 2D spatial domain information can be obtained from the imaging that represents the region of interest in the dimension of length and width. The 2D spatial domain information can be obtained from traditional X-ray radiography or the like that uses X-ray to produce 2D images of regions of interest. The 2D spatial domain information can be obtained from optical microscopy or the like that produces 2D images of cells and tissues at the microscopic level using visible light. The 2D spatial domain imaging can be obtained from nuclear medicine planar scintigraphy that detects gamma rays emitted by radiotracers to create 2D images of physiological processes. The 2D spatial domain can be obtained from traditional 2D angiography that uses X-ray and a contrast agent injected into blood vessels to visualize their structure and flow. In these cases, the additional dimension offered by the time-resolved imaging is the time.

In a possible embodiment of the imaging apparatus, the data-acquisition module is configured to capture and receive the plurality of temporally ordered datasets in at least one of following predefined time periods: respiratory cycle; cardiac cycle; diffusion activity period; fluoroscopy imaging period; perfusion period. In the conventional 2D or 3D medical imaging processes, the motion of the regions of interest has a significant impact on the image quality. In some cases, even the respiratory activity of the patient will affect the image quality. The respiratory activity is substantially periodic. Time-resolved medical imaging takes advantage of this special feature. During a respiratory cycle or cardiac cycle, at least one predefined time point can be defined for taking a 2D or 3D image. For example, if only one predefined time point is defined in a respiratory cycle or cardiac cycle, at least for the next subsequent respiratory cycle or cardiac cycle, respectively, an image of the same predefined time point can be captured. If the pixel or voxel value differs too much from the surrounding pixel or voxel value from the same predefined time point but in different respiratory cycles, it can be assumed that it is noise. If more than one predefined time points are defined in a respiratory cycle or cardiac cycle, the proposed imaging apparatus can also use the information to denoise time-resolved medical images from the images taken from different predefined time points but in the same respiratory cycle, and alternatively, from the images taken from the different respiratory cycles or cardiac cycle, respectively. The more images are taken on the regions of interest, the more facilitative the noise filtering. The proposed imaging apparatus can also be used in other substantial periodic activities. As for the medical imaging processes that focused on medical activity at a specific time period, such as diffusion activity imaging, fluoroscopy, perfusion-imaging or the like, the proposed imaging apparatus can also be applied in such medical imaging processes. The pixel or voxel value can be also assumed that it is noise, when these pixel or voxel value differs too much from the surrounding pixel or voxel value from the scans that contains similar anatomy but are recoded at different predefined time points within one time period or time cycle.

In a possible embodiment of the imaging apparatus, the imaging apparatus comprises at least one of the following apparatuses: CT scanner; MRI scanner; PET scanner; X-ray machine. The CT scanner or the like, which are characterized by the tomographic imaging where the cross-sectional images from different layers of the region of interest are imaged and aggregated into a 3D image. The MRI scanner or the like uses magnetic field gradients and electromagnetic pulses to spatially encode the intensity of a signal in the region of interest. The PET scanner or the like detects radiation rays from the annihilation of the particles to form a 3D medical image. The X-ray machine or the like emits X-ray beams to penetrate the regions of interest to obtain the projection data used for reconstructing a medical image. The X-ray machine can be used to radiography processes, fluoroscopy systems, mammography, angiography and the like. The imaging apparatus proposed here enables cross-platform applications and improves the accessibility and flexibility of applications.

In a possible embodiment of the imaging apparatus, the at least one denoising module further comprises an optimization module that is configured to set/adjust the settable/adjustable bilateral filter by implementing an optimization algorithm, wherein the optimization algorithm allows that a parametrization of the settable/adjustable bilateral filter is set automatically. The setting/adjusting process of the settable/adjustable bilateral filter is computer-executable. The settable/adjustable bilateral filter may comprise at least one settable/adjustable bilateral filter layer. There might be a plurality of settable/adjustable bilateral filter layers established by the computer-executable denoising module, which each settable/adjustable bilateral filter layer may have different filter parameters according to different noise characteristic. The input settable/ adjustable parameters of the settable/adjustable bilateral filter may be from low-SNR medical images acquired through the simulation of low-SNR images out of the existing images with high image quality. The optimization algorithm may involve a backpropagation algorithm. With the implementation of the backpropagation algorithm, the difference between the predicted image outputs and the actual images with high image quality is propagated backward through the settable/adjustable bilateral filter to optimize the parametrization. The settable/adjustable bilateral filter layer can be differentiable, which means the backpropagation algorithm can be used as a gradient estimation method to update the parameters through reducing the value of cost/loss function during the setting/adjusting of the bilateral filter. Therefore, the parametrization of the settable/adjustable bilateral filter is set automatically. In this process, the filter action on the sinograms and the reconstructed medical images can be conducted simultaneously. The setting/adjusting of the bilateral filter may be a self-supervised training. In self-supervised training process, the training parameters may not need to be labeled manually, which is more time- and cost-effective, and the training parameters may be not stuck in the local optimas.

In a possible embodiment of the imaging apparatus, the optimization module is further configured such, that the parametrization of the settable/adjustable bilateral filter includes two or three spatial parameters, an intensity range parameter and a time-intensity profile of those parameters. According to the features of the bilateral filters and the time-resolved medical imaging, the settable/adjustable parameters may only use two spatial parameters and one intensity range value and the time-intensity profile of those parameters. Alternatively, the settable/adjustable parameters may only use three spatial parameters and one intensity range value and the time-intensity profile of those parameters. Bilateral filters typically involve domain filters and range filters in medical imaging. A domain filter operates based on the spatial characteristics of an image. It refers to modify the pixel or voxel values of the data based on the location of the pixels or voxel values. A range filter selectively processes pixel or voxel values based on their intensity, in order to highlight or suppress specific ranges of brightness. When the settable/adjustable parameters of the bilateral filter may only use two spatial parameters and one intensity range value and the time-intensity profile of those parameters, the settable/ adjustable parameters may refer to the spatial kernel size widths with regard to the length dimension and width dimension of the image data used in an image generation process, the intensity range kernel size width and time-intensity profile of those parameters. When the settable/adjustable parameters of the at least one bilateral filter may only use three spatial parameters and one intensity range value and the time-intensity profile of those parameters, the settable/adjustable parameters may refer to the spatial kernel size widths with regard to the length dimension, width dimension and the depth dimension of the image data used in an image generation process, the intensity rang kernel size width and time-intensity profile of those parameters. The kernel may be a Gaussian kernel, which is used to apply Gaussian smoothing to the images by convolving the images with a Gaussian function. Gaussian kernel is essentially a 2D or 3D matrix where values, also called weights in the matrix, closer to the center of the matrix are higher, and values decrease symmetrically as they move away from the center. Compared to the other methods for denoising using convolutional neural networks or the like that uses thousands of parameters, the setting/adjusting process of the proposed method uses only few parameters, which can achieve similar filtering performance with low computational load. The method can be also explainable and produce no hallucinations since it is based on established filter operations that can be optimized and finely tuned for every specific noise characteristic.

In a possible embodiment of the method, an order of the plurality of temporally ordered datasets and theirs weighting used in the time-intensity profile are decided according to at least one of the following: temporal proximity; anatomical similarity; automated similarity metric. The temporally ordered datasets are not necessary ordered with sequential time order. The images are taken at different time points, can be ordered according to the temporal proximity of the time-resolved imaging, can be according to the anatomical similarity of the time-resolved imaging, or can be according to an automated similarity metric, such as structural similarity index, SSIM, mean squared error, MSE or the like. In different specific use scenarios, the weighting of the time-intensity profile may be different, therefore, the plurality of temporally ordered datasets are not necessary ordered with sequential time order. If the pixel or voxel value differs too much from the surrounding pixel or voxel values from the same points of the region of interest recorded with different temporally orders, it can be assumed that it is noise.

In a possible embodiment of the method, when the step of capturing and receiving the plurality of temporally ordered datasets is involving an ionizing radiation, an amount of deposited radiation dose that necessary to acquire a medical image is reduced. Ionizing radiation, such as X-ray, gamma ray or the like, used in medical imaging can cause stochastic effects in living tissue. The effective dose limit for an adult is limited to 20 milliSievert (mSv) in any single year. The effective dose assesses the potential for long-term effects after the radiation exposure that might occur in the further. The absorbed dose assesses the potential for biochemical changed in specific tissues after the radiation exposure, measured in milligray (mGy). Since the calculation of the effective dose is proportional to the absorbed dose to all organs of the body, the higher the absorbed dose, the more serious the radiation damage may occur to the body. Normally, in CT scanning, in order to allow for time-resolved image reconstruction with acceptable image quality, a comparably high radiation dose of 30 - 60 mGy is required. The proposed denoising method denoises the low-dose images, such that the denoised low-dose images having compatible performance with the high-dose images. Using the proposed denoising method, the noise reduction can be applied to reduce the dose necessary to acquire a medical image, which in the case of the medical imaging involving an ionizing radiation additional repeat imaging could be allowed to adapt the treatment plan.

In a possible embodiment of the method, the method operates with registration which. Registration brings a significant improvement, in particular the performance of the filters may be increased when it is combined with the registration. However, it goes without saying that the present method may also operate without registration. Registration in time-resolved medical imaging refers to the process of aligning two or more images into a common coordinate system. It preferably ensures that the anatomical or functional features in the images correspond spatially, even if the images were taken at different times, with different modalities, or from different viewpoints. Since the time-resolved medical imaging process takes the images in temporally order in at least one time period, the registration process is automatically finished during the imaging capturing process. When over time a region of interest no longer contains the same tissue, the information at these time points would be inherently excluded through the intensity threshold of the bilateral filter. This is important since deformable registration is a non-trivial task with a high computational load and its own margin of error.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- FIG. 1: illustrates a block diagram of an example of the image apparatus;
- FIG. 2: illustrates a block diagram of another example of the image apparatus;
- FIG. 3: illustrates a diagram of an example of a plurality of temporally ordered datasets captured within a time period;
- FIG. 4: illustrates a schematic diagram of an example of a filtering process for an exemplar image using a settable/adjustable bilateral filter;
- FIG. 5: illustrates a chart of an example of a method for time-resolved medical imaging.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

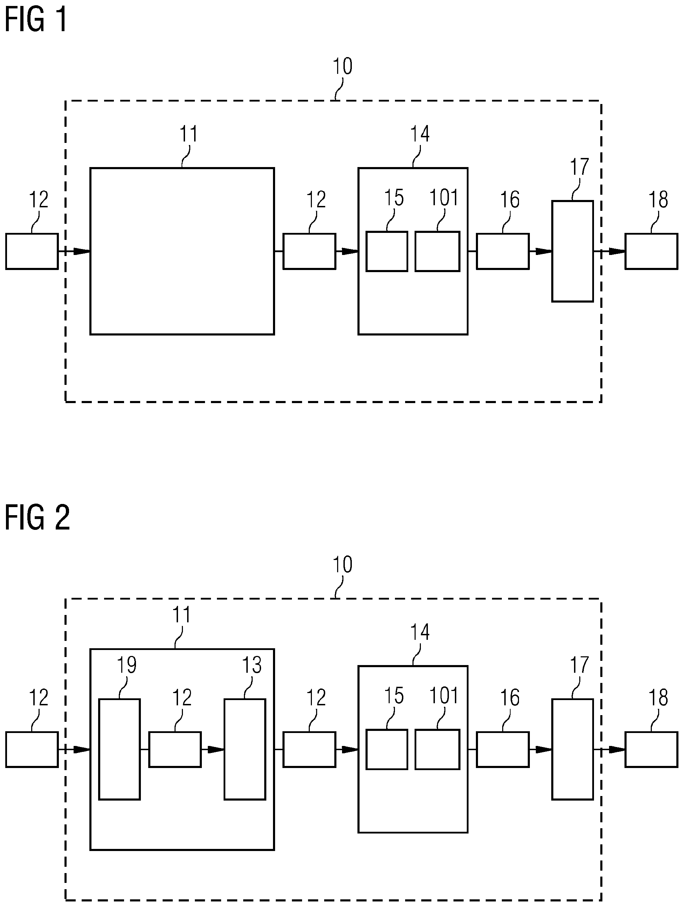

FIG. 1 illustrates a block diagram of an example of the image apparatus.

The image apparatus in FIG. 1 is denoted by reference numeral 10. The image apparatus 10 comprises a data-acquisition module 11, at least one denoising module 14 and an outputting module 17. The data-acquisition module 11 is configured to capture and receive a plurality of temporally ordered datasets 12 used in an image generation process for an entity in at least one predefined time period, such that the plurality of temporally ordered datasets 12 comprise spatial domain information and time domain information. The receiving of the plurality of temporally ordered datasets 12 may refer to store the captured datasets temporarily and wait for it to be processed later. The receiving of the plurality of temporally ordered datasets 12 may also refer to receive the datasets from external data sources. The at least one denoising module 14 is coupled to the data-receiving module 13 and comprises a settable/adjustable bilateral filter 15. The at least one denoising module 14 is configured to set/adjust filter parameters of the settable/adjustable bilateral filter 15 using the received spatial domain information and the time domain information, such to denoise the plurality of temporally ordered datasets 12 using a settable/adjustable bilateral filter 15 and to obtain a plurality of denoised temporally ordered datasets 16. The outputting module 17 is coupled to the at least one denoising module 14 and is configured to output at least one time-resolved medical image 18 for the entity using the plurality of denoised temporally ordered datasets 16.

FIG. 2 illustrates a block diagram of another example of the image apparatus. In FIG. 2, the data-receiving module 13 comprises an inputting module 19 for capturing plurality of temporally ordered datasets 12 and a data-receiving module for receiving the captured plurality of temporally ordered datasets 12. The rest part of the FIG. 2 is basically the same as illustrated in FIG. 1.

The entity to be imaged may refer to the regions of interest of a patient, a sick animal, a healthy person or animal providing comparative data through medical imaging for research or other purposes. The entity to be imaged may also refer to the non-living objects, such as imaging phantoms that designed to mimic human or animal anatomy or tissue properties.

The plurality of temporally ordered datasets 12 can comprise raw detector data described by a plurality of sinograms. Sinogram is used as a 2D transitional image between the raw detector data and the final medical image in some of the medical imaging processes. The proposed imaging apparatus allows a direct filter action on the sinogram. The proposed imaging apparatus can conduct filter function directly on the sinograms, which facilitates the later data processing step with less noises.

The plurality of temporally ordered datasets 12 can comprises reconstructed image data represented by a plurality of reconstructed images. The proposed imaging apparatus further allows a filter action on the reconstructed medical images. The process of using the raw detector data to create an image is called image reconstruction. The reconstructed image data can be from the data encoded in sinogram. The reconstructed image data can be also from the data encoded in other form of transitional images, such as k-space images or other more. The proposed imaging apparatus allows a filter action on the reconstructed medical images further increases the flexibility in the application of the imaging apparatus. In addition, the proposed imaging apparatus may allow a filter action on the sinograms and the reconstructed medical images simultaneously.

The plurality of temporally ordered datasets 12 comprise spatial domain information and time domain information, which the spatial domain information comprises 3D spatial domain information. The 3D spatial domain information can be obtained from the imaging that represents the region of interest in the dimensions of length, width and depth. The time is considered as the additional dimension of the medical imaging. Thus, in this case the time-resolved imaging can also be called as 4D imaging.

The plurality of temporally ordered datasets 12 comprise spatial domain information and time domain information, which the spatial domain information comprises 2D spatial domain information. The 2D spatial domain information can be obtained from the imaging that represents the region of interest in the dimension of length and width. In this case, the additional dimension offered by the time-resolved imaging is the time.

The plurality of temporally ordered datasets 12 are captured and received in at least one predefined time period, which the at least one predefined time period may be at least one respiratory cycle or cardiac cycle; at least one diffusion activity period; at least one fluoroscopy imaging period; at least one perfusion period. The time periods that can be represented by time cycles may be substantially periodic, such as the respiratory cycles or cardiac cycles, respectively. Time-resolved medical imaging takes advantage of this special feature. The proposed imaging apparatus 10 can also be used in other substantial periodic activities. If the pixel or voxel value differs too much from the surrounding pixel or voxel value from the same predefined time point but in different cycles, it can be assumed that it is noise. If more than one predefined time points are defined in a time cycle, the proposed imaging apparatus 10 can also use the information to denoise time-resolved medical images from the images taken from different predefined time points but in the same time cycle, and alternatively, from the images taken from the different time cycles. As for the medical imaging processes that focused on medical activity at a specific time period, such as diffusion activity imaging, fluoroscopy, perfusion-imaging or the like, the proposed imaging apparatus 10 can also be applied in such medical imaging processes. The pixel or voxel value can be also assumed that it is noise, when these pixel or voxel value differs too much from the surrounding pixel or voxel value from the scans that contains similar anatomy but are recoded at different predefined time points within one time period or time cycle.

The at least one denoising module 14 may further comprise an optimization module 101. The optimization module 101 is configured to set/adjust the settable/adjustable bilateral filter 15 by implementing an optimization algorithm, which the optimization algorithm allows that a parametrization of the settable/adjustable bilateral filter 15 is set automatically. The setting/ adjusting process of the settable/adjustable bilateral filter 15 is computer-executable. The settable/adjustable bilateral filter 15 may comprise at least one settable/adjustable bilateral filter layer. There might be a plurality of settable/adjustable bilateral filter layers established by the computer-executable denoising module, which each settable/adjustable bilateral filter layer may have different filter parameters according to different noise characteristic. The input setting/ adjusting parameters of the settable/adjustable bilateral filter 15 may be from low-SNR medical images acquired through the simulation of low-SNR images out of the existing images with high image quality. The optimization algorithm may involve a backpropagation algorithm. With the implementation of the backpropagation algorithm, the difference between the predicted image outputs and the actual images with high image quality is propagated backward through the settable/adjustable filter to optimize the parametrization. The settable/adjustable bilateral filter layer can be differentiable, which means the backpropagation algorithm can be used as a gradient estimation method to update the parameters through reducing the value of cost/loss function during the training of bilateral filter. Therefore, the parametrization of the settable/ adjustable bilateral filter is set automatically. In this process, the filter action on the sinograms and the reconstructed medical images can be conducted simultaneously. The setting/adjusting of the settable/adjustable bilateral filter may be a self-supervised training. In self-supervised training process, the training parameters may not need to be labeled manually, which is more time- and cost-effective, and the training parameters may be not stuck in the local optimas.

The optimization module 101 is further configured such, that the parametrization of the settable/adjustable bilateral filter includes two or three spatial parameters, an intensity range parameter and a time-intensity profile of those parameters.

The imaging apparatus 10 may be CT scanner, MRI scanner, PET scanner, X-ray machine. Therefore, the imaging apparatus 10 proposed here enables cross-platform applications and improves the accessibility and flexibility of applications.

The outputting module 17 outputs at least one time-resolved image 18 for the entity using the plurality of denoised temporally ordered datasets 16. The at least one time-resolved image 18 can be received and displayed by at least one screen integrated into the imaging apparatus 10. The at least one time-resolved image 18 can be received and displayed by at least one screen with wires or wirelessly connected the imaging apparatus 10. The at least one time-resolved image 18 can be received and displayed in a cloud-based repository linked to the imaging apparatus 10 so that another person can download the at least one time-resolved image 18 from the cloud-based repository. The at least one time-resolved image 18 can be stored in at least one machine code, such that other person can obtain the at least one time-resolved image 18 by decoding the at least one machine code.

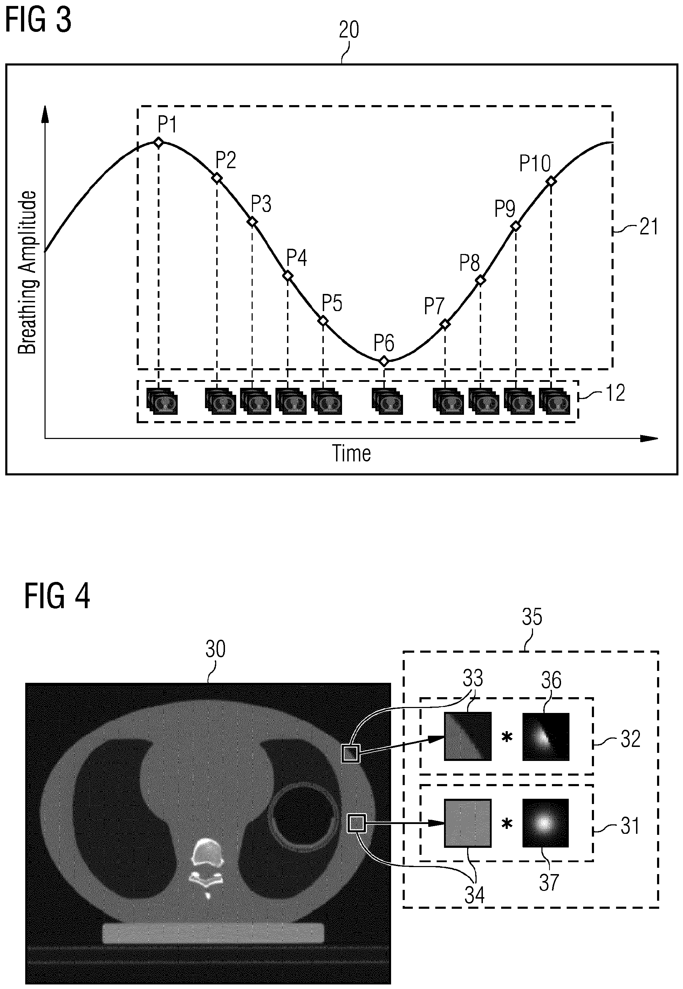

FIG. 3 illustrates a diagram of an example of a plurality of temporally ordered datasets captured within a time period. The diagram 20 represents that a plurality of temporally ordered datasets captured within a respiratory cycle 21. The vertical axis represents the breathing amplitude. The horizontal axis represents the time. At least ten time points P1, P2, ..., P10 are predefined within the respiratory cycle 21. For each time point, a dataset is captured. After one respiratory cycle 21, at least ten datasets are captured and ordered temporally to obtain a plurality of temporally ordered datasets 12. Each dataset of the plurality of temporally ordered datasets 12 may represents a 3D volume, as illustrated in FIG. 2. The predefined time points within one time period might be more or less than ten time points.

For example, if only one predefined time point is defined in a respiratory cycle, at least for the next subsequent respiratory cycle, an image of the same predefined time point can be captured. If the pixel or voxel value differs too much from the surrounding pixel or voxel value from the same predefined time point but in different respiratory cycles, it can be assumed that it is noise. If more than one predefined time points are defined in a respiratory cycle, the proposed imaging apparatus can use the information to denoise time-resolved medical images from the images taken from different predefined time points but in the same respiratory cycle, and alternatively, from the images taken from the different respiratory cycles. Therefore, the more images are taken on the regions of interest, the more facilitative the noise filtering. The proposed imaging apparatus can also be used in other substantial periodic activities. As for the medical imaging processes that focused on medical activity at a specific time period, such as diffusion activity imaging, fluoroscopy, perfusion-imaging or the like, the proposed imaging apparatus can also be applied in such medical imaging processes. The pixel or voxel value can be also assumed that it is noise, when these pixel or voxel value differs too much from the surrounding pixel or voxel value from the scans that contains similar anatomy but are recoded at different predefined time points within one time period or time cycle.

FIG. 4 illustrates a schematic diagram of an example of a filtering process for an exemplar image using a settable/adjustable bilateral filter.

In FIG. 4, a 2D reconstructed medical image 30 is taken as an example to present the filter process of one of the reconstructed medical images 30 in the plurality of temporally ordered reconstructed medical image using a settable/adjustable bilateral filter 35. The settable/ adjustable bilateral filter 35 involves a domain filter 31 and a range filter 32 implementing Gaussian kernels. Gaussian kernel is essentially a 2D matrix in this example, where values, also called weights in the matrix, closer to the center of the matrix are higher, and values decrease symmetrically as they move away from the center. The domain filter 31 operates based on the spatial characteristics of an image. It refers to modify the intensity value of the pixel region 34 based on performing a convolution process with the normalized Gaussian spatial kernel 37 and the pixel region 34. Therefore, a denoised pixel region having the same imaging region of the pixel region 34 can be obtained. The pixel region 34 has been smoothed by the domain filter 31. This filter process reduces random fluctuations of the surrounding of the pixel region 34. In this example, the shape of the Gaussian spatial kernel 37 has two dimensions, so that the shape of the Gaussian spatial kernel 37 can be set/adjusted with regard to its length dimension and width dimension according to different noise characteristics. The range filter 32 processes pixel values based on their intensity, in order to highlight or suppress specific ranges of brightness. It refers to modify the intensity value of the pixel region 33 based on performing a convolution process with the normalized Gaussian range kernel 36 and the pixel region 33. Therefore, a denoised pixel region having the same imaging region of the pixel region 33 can be obtained. The pixel region 33 has been denoised by the range filter 32, however, the edge within the pixel region 33 has been preserved. The shape of the Gaussian range kernel 36 can also be set/adjusted according to different noise characteristics.

The settable/adjustable bilateral filter 35 is successful in smoothing images while preserving edges in reconstructed medical image 30. The example of FIG.3 can be extended by preforming filtering process in 3D reconstructed medical image. In this scenario, the pixel region is replaced by a voxel region. The size of Gaussian spatial kernel 37 has three dimensions, so that the shape of the Gaussian spatial kernel 37 can be adjusted with regard to its length dimension, width dimension and depth dimension.

Each pixel or voxel of the reconstructed medical image might be performed such filtering process to conduct denoising, such that a denoised reconstructed medical image with high SNR can be obtained.

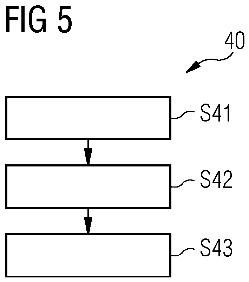

FIG. 5 illustrates a chart of an example of a method for time-resolved medical imaging.

The proposed method 40 comprises three steps: step S41, capturing and receiving a plurality of temporally ordered datasets 12 used in an image generation process for an entity in at least one predefined time period, such that the plurality of temporally ordered datasets 12 comprise spatial domain information and time domain information; step S42, setting/adjusting a settable/ adjustable bilateral filter 15 using the spatial domain information and the time domain information of the plurality of temporally ordered datasets 12, such to denoise the plurality of temporally ordered datasets 12 using a settable/adjustable bilateral filter 15 and to obtain a plurality of denoised temporally ordered datasets 16; step S43, outputting at least one time-resolved medical image 18 for the entity using the plurality of denoised temporally ordered datasets 16.

Besides the description of FIG. 4, the filtering process of the plurality of temporally ordered datasets 12 further involves the time-intensity profile of the spatial parameters and the range parameter. An order of the plurality of temporally ordered datasets 12 and their weighting used in the time-intensity profile are decided according to at least one of the following: temporal proximity; anatomical similarity; automated similarity metric. The temporally ordered datasets are not necessary ordered with a sequential time order. The images are taken at different time points, can be ordered according to the temporal proximity of the time-resolved imaging, can be according to the anatomical similarity of the time-resolved imaging, or can be according to an automated similarity metric, such as structural similarity index, SSIM, mean squared error, MSE or the like. In different specific use scenarios, the weighting of the time-intensity profile may be different, therefore, the plurality of temporally ordered datasets are not necessary ordered with sequential time order. If the pixel or voxel value differs too much from the surrounding pixel or voxel values from the same points of the region of interest recorded with different temporally orders, it can be assumed that it is noise.

Compared to the other methods to training the bilateral filter using convolutional neural networks or the like that uses thousands of parameters to train the bilateral filters, the setting/ adjusting process of the proposed method uses only few parameters, which can achieve similar filtering performance with low computational load. The method can be also explainable and produces no hallucinations since it is based on established filter operations that can be optimized and finely tuned for every specific noise characteristic. With the adoption of the time-intensity profile, when capturing the data used in an image generation process is involving an ionizing radiation and/or long acquisition time, an amount of deposited radiation dose and a prolonging acquisition time that necessary to acquire a medical image is reduced without compromising the image quality, such as contrast, temporal resolution and geometric accuracy. Furthermore, the method can be operated without registration.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

## Claims

1. An imaging apparatus (10), the imaging apparatus (10) comprising:
a data-acquisition module (11) configured to capture and receive a plurality of temporally ordered datasets (12) used in an image generation process for an entity in at least one predefined time period, wherein the plurality of temporally ordered datasets (12) comprise spatial domain information and time domain information;
at least one denoising module (14) coupled to the data-acquisition module (13) and comprising a settable/adjustable bilateral filter (15), wherein the at least one denoising module (14) is configured to set/adjust filter parameters of the settable/adjustable bilateral filter (15) using the received spatial domain information and the time domain information, such to denoise the plurality of temporally ordered datasets (12) using the settable/adjustable bilateral filter (15) and to obtain a plurality of denoised temporally ordered datasets (16);
an outputting module (17) configured to output at least one time-resolved medical image (18) for the entity using the plurality of denoised temporally ordered datasets (16).

2. The imaging apparatus of claim 1, wherein the data-acquisition module (11) is configured to capture and receive the plurality of temporally ordered datasets (12) comprising raw detector data described by a plurality of sinograms.

3. The imaging apparatus according to any of the preceding claims, wherein the data-acquisition module (11) is configured to capture and receive the plurality of temporally ordered datasets (12) comprising reconstructed image data represented by a plurality of reconstructed images.

4. The imaging apparatus according to any of the preceding claims, wherein the data-acquisition module (11) is configured such, that the spatial domain information comprises three-dimensional, 3D, spatial domain information.

5. The imaging apparatus according to any of the claims 1 to 3, wherein the data-acquisition module (11) is configured such, that the spatial domain information comprises two-dimensional, 2D, spatial domain information.

6. The imaging apparatus according to any of the preceding claims, wherein the data-acquisition module (11) is configured such, capturing and receiving the plurality of temporally ordered datasets (12) in at least one of the following predefined time periods:
- respiratory cycle;
- cardiac cycle;
- diffusion activity period;
- fluoroscopy imaging period;
- perfusion period.

7. The imaging apparatus according to any of the preceding claims, wherein the imaging apparatus (10) comprises at least one of the following apparatuses:
- computed tomography scanner, CT scanner;
- magnet resonance imaging scanner, MRI scanner;
- positron emission tomography scanner, PET scanner;
- X-ray machine.

8. The imaging apparatus according to any of the preceding claims, wherein the at least one denoising module (14) further comprises an optimization module that is configured to set/adjust the settable/adjustable bilateral filter (15) by implementing an optimization algorithm, wherein the optimization algorithm allows that a parametrization of the settable/adjustable bilateral filter (15) is set automatically.

9. The imaging apparatus according to any of the preceding claims, wherein the optimization module is further configured such, that the parametrization of the settable/adjustable bilateral filter (15) includes two or three spatial parameters, an intensity range parameter and a time-intensity profile of those parameters.

10. A method (40) for time-resolved medical imaging, in particular by employing an imaging apparatus according to any of the claims 1 to 9, the method comprising:
capturing and receiving (S41) a plurality of temporally ordered datasets (12) used in an image generation process for an entity in at least one predefined time period, wherein the plurality of temporally ordered datasets (12) comprise spatial domain information and time domain information;
setting/adjusting (S42) filter parameters of a settable/adjustable bilateral filter (15) using the received spatial domain information and the time domain information, such to denoise the plurality of temporally ordered datasets (12) using the settable/adjustable bilateral filter (15) and to obtain a plurality of denoised temporally ordered datasets (16);
outputting (S43) at least one time-resolved medical image (18) for the entity using the plurality of denoised temporally ordered datasets (16).

11. The method according to any of the preceding method-based claims, wherein an order of the plurality of temporally ordered datasets (12) and their weighting used in the time-intensity profile are decided according to at least one of the following:
- temporal proximity;
- anatomical similarity;
- automated similarity metric.

12. The method according to any of the preceding method-based claims, wherein when the step of capturing and receiving (S41) the plurality of temporally ordered datasets (12) is involving an ionizing radiation, an amount of deposited radiation dose that necessary to acquire a medical image is reduced.

13. The method according to any of the preceding method-based claims, wherein the method operates with registration.

14. A computer program product including a computer program, when program sections of the computer program are executed by a computer, cause the imaging apparatus (10) of any of the claims 1 to 9 to execute the method (40) of any of the claims 10 to 13.

15. A non-transitory computer-readable storage medium storing thereon the computer program of claim 14 by a computer.
